(19) Europäisches Patentamt
European Patent Office
Office européen des brevets

(11) **EP 4 230 289 A1**

(12) **EUROPEAN PATENT APPLICATION**

(43) Date of publication:
**23.08.2023   Bulletin 2023/34**

(21) Application number: **22157049.2**

(22) Date of filing: **16.02.2022**

(51) International Patent Classification (IPC):
**B01J 19/18** [(2006.01)]

(52) Cooperative Patent Classification (CPC):
**B01J 19/18;** B01J 2219/00049; B01J 2219/00051;
B01J 2219/00054; B01J 2219/00056;
B01J 2219/00058; B01J 2219/00063;
B01J 2219/00074; B01J 2219/00087;
B01J 2219/0009; B01J 2219/00092;
B01J 2219/00094; B01J 2219/00096;
B01J 2219/00103; B01J 2219/00191;     (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **CHT Turkey Kimya Sanayi ve Ticaret
A.S.
Istanbul (TR)**

(72) Inventors:
• **Kaya, Eyüp**
**Istanbul (TR)**
• **Göktepe Dogan, Canan**
**Istanbul (TR)**
• **Çuhaci, Pinar**
**Istanbul (TR)**

(74) Representative: **Yavuzcan, Alev
Sumer Ofis
Patent and Trademark Agency Ltd. Co.
Ayaspasa Cami Sokak No.2/1
Gumussuyu Taksim
34437 Istanbul (TR)**

(54) **EMULSION POLYMERIZATION MANAGEMENT (EPM) SYSTEM BY PROPORTIONAL
HEATING/COOLING AND FLOW CONTROLLING FOR CONSISTENT PRODUCT QUALITIES**

(57)     This invention relates to optimization of final properties of emulsion polymers (free monomer amount, gelling amount, glass transition temperature, particle size, viscosity, pH etc.) and provides consistent polymer qualities by monitoring and controlling the reaction rate by PID system equipped with heat exchangers, temperature sensors, digital flowmeters. More particularly, this invention relates to accurately determining the rate and amount of reactant conversion at a particular moment in a polymerization reaction by precise controlling of feed rate of reactants and reaction temperature management.

Figure 1

**(Cont. next page)**

(52) Cooperative Patent Classification (CPC): (Cont.)
   B01J 2219/00193; B01J 2219/00195;
   B01J 2219/002; B01J 2219/00211;
   B01J 2219/00213; B01J 2219/0022;
   B01J 2219/00222; B01J 2219/00227;
   B01J 2219/00238; B01J 2219/0024;
   B01J 2219/00243

## Description

### Technical Field

This invention relates to optimization of final properties of emulsion polymers (free monomer amount, gelling amount, glass transition temperature, particle size, viscosity, pH etc.) and provides consistent polymer qualities by monitoring and controlling the reaction rate, by PID system equipped with heat exchangers, temperature sensors, digital flowmeters. More particularly, this invention relates to accurately determining the rate and amount of reactant conversion at a particular moment in a polymerization reaction by precise controlling of feed rate of reactants and reaction temperature management.

### Prior Art

Emulsion polymerization processes utilizes monomers, emulsifiers, initiators and crosslinkers. Controlling the reaction temperature of an emulsion polymerization process is quite difficult as it is thought to be stable, regular and uniform production is highly exothermic. Many technical emulsion polymerization techniques have been developed in order to overcome the problems encountered in temperature control today. Among these techniques, obtaining reduced gel product production by adjusting the amount of cooling water supplied to the jacket is mentioned in the Chinese document CN206385050U. In the Japanese patent document No JP2008185762, it is mentioned to use the method of intermittent flow of cooling water by opening and closing of the valve with a valve opening degree. The United States patent documents No US6218468B, US6106785 and US6336741B1, which are also in the state of the art, and in the "Modeling and Control Research Center and Chemical Engineering Dept. Lehigh University, Bethlehem, PA 18015" ve "Ray, "Polymerization Reactor Control," 1985 American Control Conference, Jun. 19-21, 1985, V.2, Boston, pp.842-848." articles, techniques used for temperature control are mentioned.

Balchen et al.(1988) investigate a multivariable nonlinear controller in decoupling framework. The key issues are the effect of process/model mismatch on closed loop stability (analytical treatment); dealing with a plant in which there are more controlled variables than manipulated variables; and plants in which the manipulated variable does not appear explicitly in the controller equations (requires implicit solution). The paper concludes with an application of the nonlinear decoupling controller to a simple process simulation. Alvarez and coworkers have a series of papers treating nonlinear control of polymerization reactors (Alvarez, Suarez and Sanchez (1990), Alvarez, Hernandez,Suarez (1988), Alvarez, Alvarez, Gonzalez (1989)). While the papers do not provide a lot of insight into polymerization concepts, they do treat the problem more mathematically than most.

### Background of the invention

Control of polymerization reactors is a challenging task because of the complexity of the physicochemical phenomena and the polymerization reaction kinetics, in addition to the difficulties related to the availability of hardware sensors to provide online measurement of the end-use polymer properties. Normally, polymer properties are related to the molecular weight distribution (MWD), particle size distribution (PSD), glass transition temperature, morphology, and composition (in the case of copolymerization and terpolymerization reactions), among others. As many other processes, emulsion polymerization must be operated under safe conditions while achieving the characteristics of the products in terms of quality and production rate. The trend in industrial operation is to use a polymerization reactor to manufacture a variety of products at different grades involving frequent startups, transitions, and shutdowns that demand the design of effective process control and monitoring strategies. Polymerization reactors are some of the processes in which many process variables related to end use properties or product quality can only be measured at low sampling rates, with frequent time delays or even measured off-line. For this reason, in polymerization processes, it is interesting to develop state estimators capable of estimating unmeasurable properties from other available measurements.

The development of reliable state estimators is subjected to the availability of sufficiently accurate, mathematical models of the phenomena involved emulsion polymerization which is an industrially important process characterized by strong nonlinearities and large exothermicity by creating difficulties in temperature control and causes undesired polymer quality variations.

Due to the above-mentioned reason, fundamental models play a very important role for a control of polymerization processes. The complexity of the polymerization process, and the non-linear operating space of batch and semi-batch reactors, polymerization reactor control centered around simulation and open-loop optimal control policies in early time.

This invention is a polymerization control that allows the user to specify independently the reaction mixture temperature and the degree of monomer conversion profiles as a function of time and execute them under feedback control in a closed-loop system.

With the present invention, that approach is replaced with a feedback controller for polymerization processes that closed the loop using a measurement directly to the product's marketable quality, and thus employs feedback to eliminate quality variations and inconsistencies due to the fluctuations of process inputs and operating conditions. Polymerization reactions are very complex reaction systems characterized by a strong change in the viscosity and high exothermicity, which is often accompanied by auto-accelerating kinetics that can lead the system into uncontrollable situations and nonlinearity characterize polymerization processes. Many industrial polymerization reactions are carried out in batch/semi-batch reactors. In emulsion polymerization, monitoring and control of monomer conversion is crucial both for proper process operation and for obtaining products with desired properties (due to the influence of conversion of polymer molecular weight and particle size distributions)

This invention relates to such processes are normally exothermic, and in many cases, it is difficult to remove enough heat from the reaction vessel to prevent the contents of the reaction vessel from reaching undesirably high temperatures such as, temperatures of 100°C or higher. In many cases, transfer of heat through the walls of the reaction vessel does not remove enough heat from the contents of the reaction vessel to keep the temperature of the contents of the reaction vessel desirably low.

The global balance energy, that was made in the semi-batch reactor, includes the dynamic behavior of energy system, which it considers the heat generated from the exothermic reaction; as well as the loss energy to the surroundings, the interchange of heat between the jacket and the reaction system, including the heat induced by the stirrer, and the global difference temperature that exists in the reactor, according to the material properties of this.

The heat generated by the free radical polymerization reaction is in the first place taken up and dispersed by the aqueous phase. Heat transfer to the cooling jacket, however, can be a major scale up problem in emulsion polymerization. If geometric similarity is part of the scale-up criteria, the area for heat transfer per unit volume of reaction mixture changes inversely to the diameter for a jacketed stirred tank reactor. A change in reaction temperature severely affects the course and outcome of the polymerization process, since the reaction rate increases exponentially with increasing temperature **according to Arrhenius' law.**

The Arrhenius equation gives the dependence of the rate constant of a chemical reaction on the absolute temperature as

$$ k = Ae^{-\frac{E_a}{RT}} \quad or \quad ln\,k = -\frac{E_a}{RT} + ln\,A $$

$k$ is the rate constant (frequency of collisions resulting in a reaction),
T is the absolute temperature (in kelvins),
$A$ is the pre-exponential factor,
$E_a$ is the activation energy for the reaction (in the same units as $RT$),
R is the universal gas constant

Proper knowledge of the heat transfer is essential for controlling product properties by the reaction temperature and for preventing thermal runaway.

The classical approach provides good solutions in the control of variables such as temperature, conversion, etc. Therefore, we will supplement this approach with PID control to monitor variables, at each stage of polymerization process.

Fundamentally, two types of controllers are used, the simplest one on-off, which the manipulated variable is either at maximum flow or at zero flow. The other one is a proportional-integral-derivative (PID) controller which will be preferred to use in this art is having a closed-loop system PID controller.

A typical semi-batch emulsion polymerization reaction contains three distinct intervals. In the first one, is that where particle formation takes place and monomer droplets together with the rest of the ingredients are presented. The second interval occurs after the conclusion of the particle formation period whereby only mature latex particles now exist; the particle number density remains constant, and the particles grow by propagation in the presence of monomer droplets. Finally, the third interval commences, where the remaining monomer contained within the particles is polymerized.

In the first, the reactor temperature rises monotonically up to the desired temperature $T_{set}$, while the adjustment of $T_{set}$ and other control parameters takes a much shorter time with the PID controller compared to the conventional/classic method. The main intervals of emulsion polymerization are determined by the consumption of monomer during the reaction. Besides, all propagation reactions are highly exothermic and in the order of 20 Cal/mol for most common monomers. At high conversions, the reactor mixture may become very viscous. This introduces mixing problems, and the mechanical energy required for such operation in turn produces more heat. Thus, the problems of heat removal, mixing, and conveying are important conditions that must be carefully controlled during polymerization.

A method of preparing an emulsion polymer having a low residual monomer content, wherein a system for heat exchange is provided in which process material flows through a heat exchanger comprising multiple heat transfer stages and the heating and or cooling power applied to each stage can be modified independently.

In this document, the material which is required to be heated or cooled within the heat exchanger is referred to as the process material. The process material may be a liquid, an emulsion, a super critical fluid, a vapor, a gas or a paste.

In all embodiments of the invention which include the use of a heat exchanger, whether in the reactor heating/cooling recycle loop, or in the reactor discharge stream, suitable heat exchangers include, for example, shell and tube, plate and frame, plate and fin and spiral heat exchangers. Plate and frame heat exchangers are preferred.

In those embodiments of the invention process material is supercritical water and process control is a closed loop system with PID control of reaction temperature while following monomer and initiator rate.

**Detailed Description of Invention**

The present invention describes the modeling, dynamic optimization and nonlinear control of an industrial emulsion polymerization reactor producing all kinds of homo-, co-, ter-polymers based on vinyl, acrylate esters and styrene. In this invention, a more complex dynamic optimization cycle is performed by controlling three different variables from a single control parameter determined as the reactor temperature. Our three variables identified are the reactor temperature along with the initiator and monomer flow rate controlled by the mass digital flow meter to increase the reaction conversion rate. The potential of dynamic optimization in finding optimal feed policies and operating temperature to improve the productivity.

An emulsion polymerization process displays different behaviors according to the relative rates of initiation, propagation and termination, which at the same time depend on the monomer flow rate, initiator flow rate and reaction conditions.

A pre-heating step of the reactor is carried out by supercritical heat into the reactor jacket in order to reach a set temperature. The reaction starts when the activation temperature of the initiator is reached. This stage of the process is operated in batch mode and, during that period, primary nucleation takes place, generating most of the particles. In this stage, the total number of particles is defined and remains almost constant during the rest of the reaction, including the following feed-batch operation. The remaining monomer, according to the recipe, is fed continuously during a major part of the reactor operation and its flow rate can be adjusted to approximately regulate the reactor temperature and in this way, partially reduce the rate of heat generation by means of its sensible heat. The initiator by using digital mass flowmeters a precise controlling of feed rate on the mass unit can be fed continuously to the reactor at a variable flow rate or, according to the industrial procedure, by finite impulses at a constant flow rate at two or three different times during the batch. Because of the exothermicity of the reaction, high quantities of heat are released and the temperature inside the reactor is controlled around a specified value by adjusting the inlet jacket temperature.

Reactor temperature variations in an ideal emulsion polymerization can change the polymerization rate and modify the degree of polymerization. However, at the same time, some possible side effects could appear when temperature increases. For example, the risk of instability of the emulsion system and production of cross-linked, branched, and gelled polymer increases. The polymer structure and molecular weight distribution change. In this way, it is important to define the range of variation of the temperature in order to obtain the desired performance of the reaction. Also, when a chain transfer agent is used to control the degree of polymerization, this variable could be considered as manipulated variable instead of temperature. Three main input variables to the process can be identified, monomer flow rate, initiator flow rate and inlet jacket temperature, this latter being adjusted by means of a three way valve. The optimum temperature is chosen because of its large influence on the polymerization reaction and polymer properties. The invention relates to polymerization reactions, particularly to monitor and control the rate and the amount of conversion in emulsion polymerization reactions. More particularly, the invention relates to accurately determining the rate and amount of conversion at a particular moment in a polymerization reaction so as to control the rate of conversion and to optimize cooling resources.

"A Proportional Heating-Cooling System for Kinetics Reaction Control of Emulsion Polymerization" realized to achieve the object of this invention is shown in the figure attached; and these Figures are;

> **Figure 1.** is the schematic view of a proportional heating-cooling system for the kinetics reaction control of the emulsion polymerization" according to the invention.

> **Figure 2.** is partially show series flow arrangement in a PHE .

Parts included in the figures individually enumerated and their equivalents were provided below.

1. System
2. Reactor
3. Plate Heat Exchanger (PHE)
4. Circulation pump
5. Control Valves
6. Expansion vessel
7. Sensor
8. PID (proportional integral derivate) controller

A proportional heating-cooling system (1) for the kinetics reaction control of the emulsion polymerization according to the invention,

- at least one reactor (2) made of stainless-steel jacket with outer helix tubes through which the liquid to be used for heating or cooling passes and where the polymerization reaction takes place,

- at least two two-plate heat exchangers (3) performing the process of cooling and/or heating the water passing through the helix tubes by heat transfer,

- at least one circulation pump (4) used to convey the liquid, preferably water, to be used for cooling or heating in the system,

- multiple proportional control valves (5) used for directing water between the reactor (2), the heat exchanger (3) and the circulation pump (4),

- at least one expansion vessel (6) in which the water exiting from the reactor (2) is collected,

- at least one the sensor (7) inside the reactor (2) that measures temperature,

- at least one PID controller (8) that determines the heating or cooling of the reactor (2), in which the desired temperature value is entered in the reactor (2) and depending on the temperature value of the reactor (2), receiving from the temperature sensor (7) and ensures that water is pumped into the helical tubes by the circulation pump (4) from at least one heat exchanger (3) and the reactor temperature reaches the desired temperature value.

In the system (1) subject to the present invention, emulsion polymerization process is carried out with temperature control using a PID controller (8). The PID controller (8) is a proportional integral differential controller and provides a control loop feedback mechanism to achieve results with minimum deviation. For this, the PID controller (8) includes variable proportional, integral and derivative coefficients in the control loop feedback mechanism.

In the system (1) subject to the invention, the PID controller (8) receives an input from the temperature sensor (7) and creates an output to the heat exchanger (3) so that the process temperature can be controlled without any operator intervention. The PID controller (8) imports the data it receives from a temperature sensor (7) such as a thermocouple as an input to realize the temperature control. The PID controller (8) compares the actual temperature value it receives from the sensor (7) with the required control temperature value, and produces a heat exchanger (3) output that will enable the desired temperature value to be reached with the heat exchanger (3) in the reactor (2). The PID controller (8) opens the valves (5) proportionally to create a cooling effect and keeps the system temperature at the desired value in the system (1).

In the system (1) subject to the invention, the desired temperature value is achieved by controlling the opening rate of the valves (5). In case of a condition in which the temperature value should reach the desired value, the PID controller (8) completely opens and closes the heating or cooling proportional valves (5) and ensures the desired temperature value to be reached quickly. Thus, it is ensured that the system (1) is kept at the desired temperature value fast and effectively without the need for any external operator intervention. Besides, the system (1) tries to reach the temperature value determined by the PID controller (8) as soon as possible and closes the valve (5) when the desired value is reached. A precise temperature setting is thus provided in the system (1). In the system (1), preferably and depending on technical requirements, at least one of the globe valve, steel ball, control valve and three-way valve is preferred as a valve (5).

In all embodiments, it is preferred to use PHE (3) to supply properly heating and cooling water in to the jacket. PHE has several types of flow patterns can be achieved.

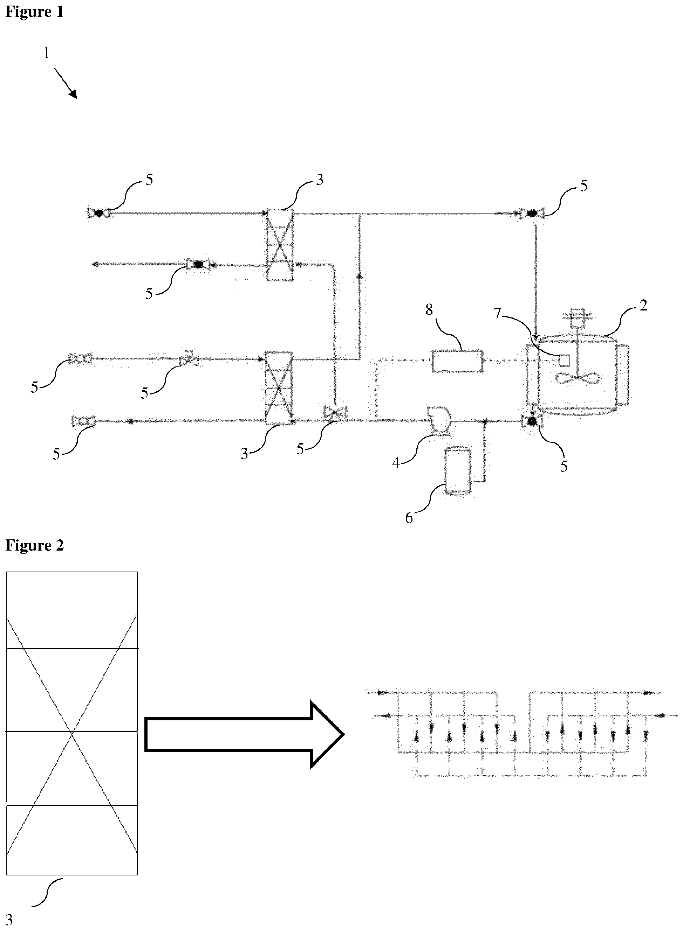

- Series flow n pass-n pass (Figure 2);

- single-pass looped: U-arrangement, Z-arrangement;
- multipass with equal pass (n pass-n pass);
- multipass with unequal pass, 2 pass-1 pass;
- multipass with unequal pass, 3 pass-1 pass and most preferable one is single pass looped types which is shown as follow figure.

Benefits of plate heat exchangers (PHE) (3) are:

    i. High turbulence and high heat transfer performance
    ii. Reduced fouling:
    iii. Cross-contamination eliminated
    iv. True counterflow
    v. Close approach temperature
    vi. Multiple duties with a single unit
    vii. Expandable
    viii. Easy to inspect and clean, and less maintenance
    ix. Lightweight
    x. High-viscosity applications
    xi. Saves space and servicing time
    xii. Lower liquid volume
    xiii. Less operational problems
    xiv. Lower cost
    xv. Quick process control

Plate and frame heat exchangers (3) have two rectangular and members holdings together series of metal plates with holes in each corner to allow the liquids to pass through. Each of the plates has a gasket to seal the plates and arrange the flow of the fluids between the plates.

Plate and frame heat exchangers (3) have two rectangles and elements that hold together a series of metal plates with holes in each corner to allow fluids to pass through. Each of the plates has a gasket to seal the plates and regulate the fluid flow between the plates. The heat exchangers (,3) is used to control the reaction temperature. During the heat removal process, the same water is used in the jacket, which circulates between the heating and cooling combined plate frame heat exchanger.

In this technique, the fluid is supercritical water pressurized at 3 bar.

The heating source for the heat plate side is steam, the cooling source for the cooling side is cold water. A closed-loop operating control system with the PID controller (8), receives an input from the temperature sensor (7) and creates an output to the plate heat exchanger (3), is used to precisely control the polymerization temperature and obtain an aqueous emulsion polymer with stable physical properties and low free monomer content. As shown in the well-known equation of Arrhenius's law, kinetic energy increases with temperature. As the temperature increases, the reaction rate also increases. Thus, when we increase the temperature, the number of molecules whose kinetic energy is greater than the activation energy increases. Uncontrolled heating and cooling systems at the reactor temperature will cause sudden temperature changes as well as run-away reactions, which is not safe for production.

The system (1) controls the percentage openings of the proportional control valves (5,) to reach the set point and opens and closes the proportional 'heat' or 'cool' valves as needed.

With this method, the amount of cooling water supplied to the jacket section of the reactor is adjusted according to the opening degree of the proportional valves, and the polymerization temperature is tried to be kept within the range of $\pm$ 0.5-1.0% of a predetermined polymerization temperature.

As it approaches the set point, the system will close the valve settings precisely and make the ideal temperature setting. The reaction temperature is precisely maintained by an external plate and frame heat exchanger with closed-loop PID control systems.

The present invention is now illustrated in greater detail with reference to Examples, but it should be understood that the present invention is not deemed to be limited thereto. All the percent, parts, and ratios are by weight unless otherwise indicated.

**EXAMPLE:**

In the following examples, Sty refers to styrene, 2-EHA refers to 2-ethylhexylacrylate, MAA refers to Methacrylic Acid and AA refers to Acrylic Acid. In the recipes, the amounts shown refer to parts by weight.

The following ingredients were added to a 5 tons reactor equipped with agitator:

Water - 1300 parts
Monomers (MAA/AA/2-EHA/Sty) - 80 parts
Alcohol Ether Sulphates Surfactant - 10 parts
C13-oxo alcohol ethoxylates - 15 parts
Ammonium Persulfate - 0,5 parts
Sodium Bi Carbonate - 1 parts

The inner temperature was kept at 80±1°C. while bubbling nitrogen through the mixture.

Following an induction period, the polymerization reaction occurred with no heating or cooling applied to the reactor.

The following ingredients were then added to the reactor:

Monomer Emulsion:

Water - 750 parts
Monomers (MAA/AA/2-EHA/Sty) - 2420 parts
Alcohol Ether Sulphates Surfactant - 80 parts
C13-oxo alcohol ethoxylates - 80 parts

Catalyst

Water -75 parts
Ammonium Persulfate - 1,5 parts

The recipe is submitted in the system by default. To start-up, the process creates new recipe and its name on the system. Set the reaction temperature, flowrate the monomer and catalyst amount as shown in Table 1:

Step 1: Define the desired temperature in the reactor to initiate the reaction and the desired heat-up time to reach the initial temperature
Step :2 Define the temperature and time required for the reaction
Step 3: Define the desired mixing time and temperature after the reaction is completed
Step 4 : Define the Cooling-down time and temperature of the reactor
Step (0 ..50) : You can define x number of steps for cooling/heating processes during the reaction and post reaction

Table 1 : Recipe Steps for Polymerization

| Recipe Name | CHT 0001 | | | | | | |
|---|---|---|---|---|---|---|---|
| Recipe Step | Temperature, °C-Set Point | Step Time, minutes | Step Type | Monomer Emulsion Total, kg | Catalyst Total,kg | Monomer Flow Rate, kg/min | Catalyst Flow Rate, kg/min |
| 1 | 80 | 20 | Heat | | | | |
| 2 | 90 | 240 | Heat-Cool | 3500 | 200 | 14,58 | 0,83 |
| 3 | 90 | 120 | Heat-Cool | | | | |
| 4 | 40 | 1060 | Cool-Stand by | | | | |

and then, the monomer emulsion and catalyst are feeding into the reactor over 4 hours by the mass digital flow meter while stirring. After the addition, the stirring was continued for an additional period of 2 hours to complete polymerization. The controlled heat cooling system provided that the system was kept at the set temperature during the polymerization reaction. As seen in graph 1 below, a minimum deviation was observed between the set temperature and the reaction temperature during the polymerization reaction with the PID control system. The reaction efficiency was quite high by PID control system.

**Graph 1** Set value versus Reaction Temperature. Temperature control of reaction with PID system.

During the polymerization reaction, the system was kept stable with neither phase separation nor blocking, except that a slight agglomerate deposited on the inner wall of the reactor. When the resulting emulsion polymer was filtered through a net of 100 mesh, the amount of coagula was not more than 0.01 part. Gas chromatography of the polymer revealed that the total amount of unreacted monomers was not more than 0,01%.

## Claims

1. A proportional heating-cooling system (1) for the kinetics reaction control of the emulsion polymerization, **characterized by**;

    - at least one reactor (2) made of stainless steel jacket with outer helix tubes through which the liquid to be used for heating or cooling passes and where the polymerization reaction takes place,
    - at least two two-plate heat exchangers (3) performing the process of cooling and/or heating the water passing through the helix tubes by heat transfer,
    - at least one circulation pump (4) used to convey the liquid, preferably water, to be used for cooling or heating in the system,
    - multiple proportional control valves (5) used for directing water between the reactor (2), the heat exchanger (3) and the circulation pump (4),
    - at least one expansion vessel (6) in which the water exiting from the reactor (2) is collected,
    - at least one the sensor (7) inside the reactor (2) that measures temperature and
    - at least one PID controller (8) that determines the heating or cooling of the reactor (2), in which the desired temperature value is entered in the reactor (2) and depending on the temperature value of the reactor (2), receiving from the temperature sensor (7) and ensures that water is pumped into the helical tubes by the circulation pump (4) from at least one heat exchanger (3) and the reactor temperature reaches the desired temperature value.

2. A proportional heating-cooling system (1) according to Claim 1; **characterized by** the PID controller (8) which is a proportional integral differential controller and provides a control loop feedback mechanism to achieve results with minimum deviation.

3. A proportional heating-cooling system (1) according to Claim 1 or 2, **characterized by** the PID controller (8) which includes variable proportional, integral and derivative coefficients in the control loop feedback mechanism.

4. A proportional heating-cooling system (1) according to any of the preceding claims, **characterized by** the PID controller (8) which receives an input from the temperature sensor (7) and creates an output to the heat exchanger (3) so that the process temperature can be controlled without any operator intervention.

5. A proportional heating-cooling system (1) according to any of the preceding claims, **characterized by** the PID controller (8) which imports the data it receives from a temperature sensor (7) such as a thermocouple as an input for realize the temperature control.

6. A proportional heating-cooling system (1) according to any of the preceding claims, **characterized by** the PID controller (8) which compares the actual temperature value it receives from the sensor (7) with the required control temperature value, and produces a heat exchanger (3) output that will enable the desired temperature value to be reached with the heat exchanger (3) in the reactor (2).

7. A proportional heating-cooling system (1) according to Claim 6, **characterized by** the PID controller (8) which opens the valves (5) proportionally to create a cooling effect and keeps the system temperature at the desired value in the system (1).

**Figure 1**

**Figure 2**

Europäisches Patentamt

European Patent Office

Office européen des brevets

# EUROPEAN SEARCH REPORT

Application Number

EP 22 15 7049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/152328 A1 (ODI TIMOTHY O [US] ET AL) 1 June 2017 (2017-06-01) * paragraphs [0080] – [0104], [0107] – [0110], [0124] – [0126], [0129] – [0135], [0138] – [0144], [0148], [0176] – [0182]; claims; figures * | 1-7 | INV. B01J19/18 |
| X | JP 2003 313204 A (NITTO DENKO CORP) 6 November 2003 (2003-11-06) * paragraphs [0025] – [0035], [0062] – [0065], [0075] – [0076]; claims; figures * | 1-7 | |
| X | CN 109 464 979 A (ZHEJIANG COSMOC ENGINEERING TECH CO LTD) 15 March 2019 (2019-03-15) * paragraphs [0017] – [22(machinetranslation)]; claims * | 1-7 | |
| X | US 5 697 436 A (JOHNSON WILLIAM HAROLD [US] ET AL) 16 December 1997 (1997-12-16) * column 2, line 32 – column 3, line 55; figure 1 * | 1-7 | TECHNICAL FIELDS SEARCHED (IPC) |
| X | CN 107 930 563 A (HANGZHOU PSA AUTOMATION ENG CO LTD) 20 April 2018 (2018-04-20) * paragraphs [0007] – [0015], [0027] – [0028]; claims * | 1-7 | B01J |
| Y | US 2021/379550 A1 (JIN HAOZHE [CN] ET AL) 9 December 2021 (2021-12-09) * paragraph [0039] – paragraph [0041] * * paragraph [0028] – paragraph [0032] * | 1-7 | |
| Y | CN 203 370 538 U (ZHEJIANG XINLI CHEMICAL INDUSTRY CO LTD) 1 January 2014 (2014-01-01) * claims; figures * | 1-7 | |

-/--

The present search report has been drawn up for all claims

| Place of search | Date of completion of the search | Examiner |
|---|---|---|
| Munich | 5 July 2022 | Kurtulan Dogan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 22 15 7049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 165 416 A2 (MITSUBISHI RAYON CO [JP]) 27 December 1985 (1985-12-27) * pages 5-7 * ----- | 1-7 | |
| Y | EP 1 160 257 A2 (ROHM & HAAS [US]) 5 December 2001 (2001-12-05) * claims * ----- | 1-7 | |

TECHNICAL FIELDS
SEARCHED        (IPC)

The present search report has been drawn up for all claims

| Place of search | Date of completion of the search | Examiner |
|---|---|---|
| Munich | 5 July 2022 | Kurtulan Dogan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 7049

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2022

| Patent document cited in search report | | Publication date | Patent family member(s) | | Publication date |
|---|---|---|---|---|---|
| US 2017152328 | A1 | 01-06-2017 | US 2017152328 A1 | | 01-06-2017 |
| | | | US 2017306059 A1 | | 26-10-2017 |
| JP 2003313204 | A | 06-11-2003 | JP 3818375 B2 | | 06-09-2006 |
| | | | JP 2003313204 A | | 06-11-2003 |
| CN 109464979 | A | 15-03-2019 | NONE | | |
| US 5697436 | A | 16-12-1997 | NONE | | |
| CN 107930563 | A | 20-04-2018 | NONE | | |
| US 2021379550 | A1 | 09-12-2021 | CN 110068242 A | | 30-07-2019 |
| | | | US 2021379550 A1 | | 09-12-2021 |
| | | | WO 2020187338 A1 | | 24-09-2020 |
| CN 203370538 | U | 01-01-2014 | NONE | | |
| EP 0165416 | A2 | 27-12-1985 | CA 1255441 A | | 06-06-1989 |
| | | | EP 0165416 A2 | | 27-12-1985 |
| | | | JP H0542441 B2 | | 28-06-1993 |
| | | | JP S60248702 A | | 09-12-1985 |
| | | | US 4742472 A | | 03-05-1988 |
| EP 1160257 | A2 | 05-12-2001 | DE 60127205 T2 | | 20-12-2007 |
| | | | EP 1160257 A2 | | 05-12-2001 |
| | | | US 2002001547 A1 | | 03-01-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 206385050 U
- JP 2008185762 B
- US 6218468 B
- US 6106785 A
- US 6336741 B1

**Non-patent literature cited in the description**

- **RAY.** Polymerization Reactor Control. American Control Conference, 1985, vol. 2, 842-848